Europäisches Patentamt

(19) European Patent Office     (11) Veröffentlichungsnummer : **0 047 717**

Office européen des brevets     **B1**

(12) **EUROPÄISCHE PATENTSCHRIFT**

(45) Veröffentlichungstag der Patentschrift :    (51) Int. Cl.³ : **E 02 D 29/02**, E 02 D 17/20,
22.06.83    **A 01 G   9/00**

(21) Anmeldenummer : **81810363.2**

(22) Anmeldetag : **04.09.81**

(54) **Baustein.**

(30) Priorität : **05.09.80 CH 6698/80**    (73) Patentinhaber : **Steiner Silidur AG**
      **Niederfeld**
(43) Veröffentlichungstag der Anmeldung :    **CH-8450 Andelfingen (CH)**
**17.03.82 Patentblatt 82/11**
      (72) Erfinder : **Steiner, Alfred**
(45) Bekanntmachung des Hinweises auf die Patenter-    **Im Stucki**
teilung : **22.06.83 Patentblatt 83/25**    **CH-8450 Andelfingen (CH)**

(84) Benannte Vertragsstaaten :    (74) Vertreter : **Schmid, Rudolf et al**
**AT BE CH DE FR GB IT LI LU NL SE**    **c/o ISLER & SCHMID Patentanwaltsbureau Walche-**
      **strasse 23**
(56) Entgegenhaltungen :    **CH-8006 Zürich (CH)**
**DE A 2 809 892**
**FR A 1 555 726**
**FR A 2 065 287**

Baustein

Die vorliegende Erfindung betrifft einen Baustein gemäss dem Gattungsbegriff des unabhängigen Anspruchs 1.

Formsteine zum Bau von Trockenmauern, Stütz- oder Futtermauern und zur Befestigung von Böschungen als Schutz vor Erosionsschäden oder Rutschungen sind bekannt. Vielfach werden solche Formsteine in geöffneter Bauweise aufgeschichtet, damit die Zwischenräume, ähnlich Bermen bei terrassierter Verbauung, begrünt werden können. In dieser Richtung wurde mit einem Böschungsstein gemäss CH-A-587'390 ein neuer Weg eingeschlagen.

Dieser Formstein ist ein kastenförmiger, nach hinten offener Betonfertigstein mit einer Frontwand, zwei Seitenwänden und einem Boden. Die beiden Seitenwände sind um ein geringes Mass bis unterhalb des Bodens verlängert, so dass im Boden beidseitig Rinnen entstehen, derart, dass geschichtete Formsteine mittels einer damit entstehenden Verzahnung ineinandergreifen. So entsteht eine Art Schwergewichtsmauer mit dem Eigengewicht der Steine und dem in den Hohlraum eingefüllten Erdmaterial als Flächengewicht.

Durch die Verzahnung ergeben sich bei den beschriebenen Formsteinen Nachteile, einerseits durch ein hohes Gewicht der Steine von rund 50 kg infolge der Abmessungen zwischen den Rinnen, die für konvexe oder konkave Mauerkrümmungen notwendig sind, und anderseits durch einen hohen Bedarf an Formsteinen pro Mauerflächeneinheit. So werden beispielsweise 8 Steine pro m² Mauer benötigt und es kann eine stärkste Mauerneigung von 3 : 1 bzw. ein kleinster Krümmungsradius von etwa 2 m erzielt werden.

Es hat sich gezeigt, dass für viele Fälle, insbesondere bei einer Terrassierung des Umgeländes bei Einfamilienhäusern, wo Böschungen von maximal 1 m bis 2 m zu bewehren sind, diese bekannten Formsteine zu teuer und trotzdem für viele Anwendungen zu wenig vielseitig einsetzbar waren.

Es ist deshalb Aufgabe der Erfindung, einen Formstein der beschriebenen Art zu schaffen, der leichter ist und daher billiger herstellbar ist und mit dem von einer senkrechten Mauer bis zu einer Mauer mit einer geringsten Neigung von angenähert 2 : 1 mit entsprechender Hinterfutterung mit Erdreich und von rechten Abwinklungen bis zu gestrecktem Mauerverlauf mit jeder beliebigen Mauerkrümmung jede Mauerform ermöglicht wird.

Erfindungsgemäss wird dies durch die Merkmale im kennzeichnenden Teil des unabhängigen Anspruchs 1 erreicht.

Ein Ausführungsbeispiel der Erfindung wird nachfolgend anhand der Zeichnung erläutert. Es zeigen:

Figur 1 eine perspektivische Ansicht eines Schalenbausteines nach der Erfindung,

Figur 2 eine Frontalansicht auf eine Trockenmauer aus Schalenbausteinen gemäss Fig. 1,

Figur 3 einen Querschnitt durch eine Stützmauer für eine Böschungsbefestigung, und

Figur 4 einen Grundriss einer Stützmauer zur Darstellung beliebiger Mauerkrümmungen.

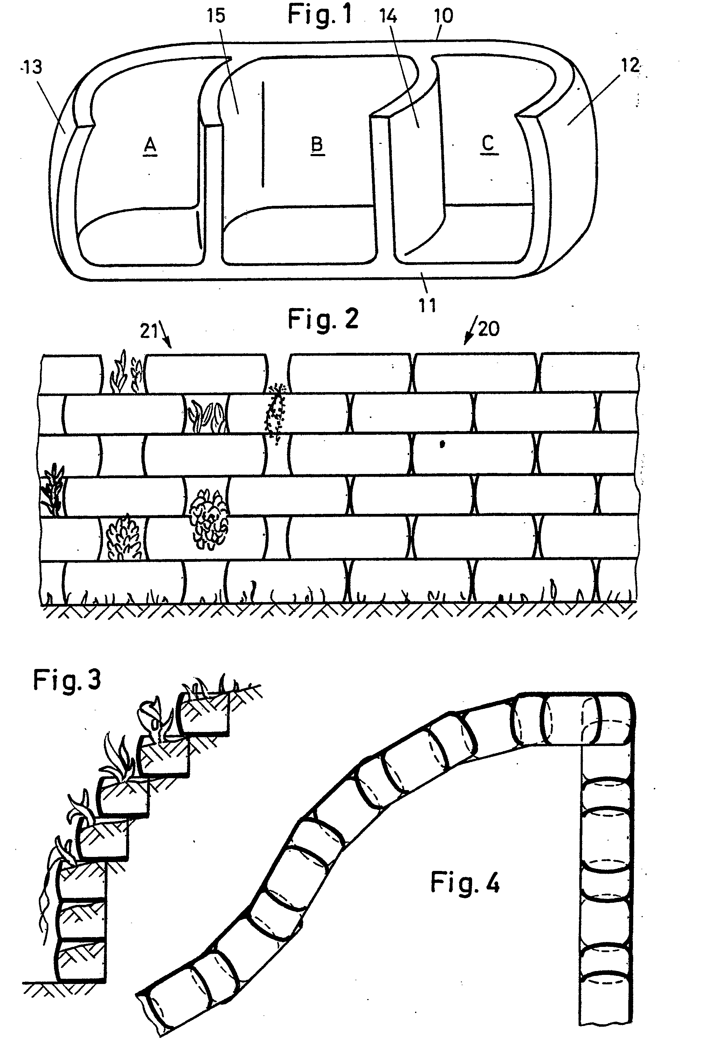

Der Schalenbaustein gemäss Fig. 1 ist von der hinten offenen Seite aus gesehen dargestellt. Der Schalenbaustein besteht aus einer Stirnwand 10, einer Bodenwand 11, zwei Seitenwänden 12, 13 und zwei Trennwänden 14, 15. Die beiden Seitenwände 12, 13 sind konvex nach aussen gewölbt und zwar derart, dass sie oben, unten und hinten eingezogen sind. Auch die Stirnwand 10 ist konvex gewölbt, wobei sie am oberen Rand und am unteren Rand nach hinten gerundet ist. Die Uebergangspartien zwischen der Bodenwand 11 und den Seitenwänden 12, 13, zwischen der Bodenwand 11 und der Stirnwand 10 und zwischen der Stirnwand 10 und den Seitenwänden 12, 13 sind gerundet.

Der Hohlraum zwischen diesen beschriebenen vier Wänden ist durch die zwei Trennwände 14, 15 in drei Räume A, B, C unterteilt. Die Trennwände 14, 15 sind im Grundriss nach aussen hin konkav gekrümmt und stehen wenigstens angenähert senkrecht auf der Bodenwand. Diese Wände können als Mantelabschnitte senkrechter Zylinder mit Kegelschnitten als Leitlinie betrachtet werden.

Die Oberkanten von Stirnwand 10, der Seitenwände 12, 13 und der Trennwände 14, 15 liegen in einer gemeinsamen Ebene. Damit kann bei reihenweiser Schichtung derartiger Schalenbausteine ein Abstand zwischen benachbarten Schalenbausteinen frei gewählt werden, derart, dass der jeweils obere Baustein je auf einer Seitenwand 12 oder 13 und der entsprechenden Trennwand 14 oder 15 gleicherweise aufliegt.

Wie Fig. 2 zeigt, können Mauern in geschlossener Bauweise 20, wie rechts in Fig. 2 dargestellt, oder in offener Bauweise 21, wie links in Fig. 2 dargestellt, trocken geschichtet werden. Bei offener Schichtung können die Zwischenräume zwischen zwei benachbarten Schalensteinen in bekannter Weise begrünt werden.

Neu und vorteilhaft an diesen vorgeschlagenen Schalenbausteinen ist die aus Fig. 3 und 4 ersichtliche senkrechte Schichtung, die in eine der Geländeform angepasste flachere Böschungneigung übergehen kann, sowie die mit praktisch unbeschränkter Variation der Mauerkrümmungen zwischen gestreckt und rechtwinklig verlaufende Mauerform.

Allerdings können mit einem solchen Schalenbaustein nach der Erfindung keine hohen Mauern aufgeschichtet werden, weil die statische Festigkeit fehlt. Bei einer Länge von 60 cm, einer Höhe von 20 cm und einer Tiefe von 25 cm weist der Schalenbaustein bei üblicher Beschaffenheit aus Beton ein Gewicht von rund 35 kg auf. Je nach Böschungswinkel lassen sich aber auch mit diesen vorgeschlagenen Schalensteinen Mauern bis zu 1,5 m errichten. Nach einiger Zeit, üblicherweise 1-2 Jahre, sind die Pflanzenwurzeln derart weit in den gewachsenen Boden der Böschung vorgedrungen, dass die Mauer durchgehend als zum Boden gehörende Einheit betrachtet werden kann. Für die Hangentwässerung müssen keine besonderen Vorkehrungen getroffen werden, weil sowohl in geschlossener als auch in offener Bauweise genügend Spalte und Ritzen vorhanden sind, dass das Hangwasser auch bei starkem Regen leicht abfliessen kann, ohne dass die Böschung erodiert wird.

**Ansprüche**

1. Baustein für lebendverbaubare, trocken geschichtete Mauern, mit Stirnwand (10), Bodenwand (11) und zwei Seitenwänden (12, 13), gekennzeichnet durch eine ebene Bodenwand (11) mit gerundeten Uebergangspartien zu Stirn- (10) bzw. Seitenwänden (12, 13), ferner dadurch, dass wenigstens zwei weitere, einen mittleren Raum (B) und zwei äussere Räume (A, C) zwischen den Seitenwänden (12, 13) begrenzende Trennwände (14, 15) vorhanden sind, und dass die Oberkanten von Stirnwand (10), Seitenwänden (12, 13) und Trennwänden (14, 15) wenigstens angenähert in einer Ebene liegen.

2. Baustein nach Anspruch 1, dadurch gekennzeichnet, dass sowohl die Stirnwand (10) als auch beide Seitenwände (12, 13) nach aussen gewölbt sind.

3. Baustein nach Anspruch 2, dadurch gekennzeichnet, dass Stirnwand (10) und Seitenwände (12, 13) durch die Wölbung nach unten und oben hin eingezogen sind.

4. Baustein nach Anspruch 3, dadurch gekennzeichnet, dass der Uebergang von Seitenwänden (12, 13) zur Stirnwand (10) gerundet ist.

5. Baustein nach Anspruch 4, dadurch gekennzeichnet, dass die Seitenwände (12, 13) nach hinten zu eine Rundung aufweisen.

6. Baustein nach Anspruch 5, dadurch gekennzeichnet, dass die Rundung der Seitenwände (12, 13) wenigstens angenähert einer gleichmässig gekrümmten Linie folgt.

7. Baustein nach Anspruch 6, dadurch gekennzeichnet, dass die gekrümmte Linie ein Ausschnitt eines Kegelschnittes ist.

8. Baustein nach Anspruch 1, dadurch gekennzeichnet, dass die Trennwände (14, 15) symmetrisch bezüglich einer senkrecht auf der Bodenwand (11) stehenden Mittelebene der Stirnwand (10) verlaufen.

9. Baustein nach Anspruch 8, dadurch gekennzeichnet, dass die Trennwände (14, 15) im Grundriss eine Krümmung aufweisen, derart, dass der Raum (B) zwischen ihnen im mittleren Bereich die grösste Ausdehnung hat.

10. Baustein nach Anspruch 9, dadurch gekennzeichnet, dass die Trennwände (14, 15) je einen Mantelabschnitt eines senkrechten Zylinders mit einem Kegelschnitt als Basislinie darstellen.

**Claims**

1. Brick for dry stacked walls, able to be built up with living plants, with a front face (10), a base (11) and two side faces (12, 13), characterised by a flat base (11) with rounded transition zones to the front (10) and side faces (12, 13), further characterised in that at least two additional partitions (14, 15) are present which define a central space (B) and two outer spaces (A, C) between the side faces (12, 13), and that the upper edges of front face (10), side faces (12, 13) and partitions (14, 15) lie at least approximately in one plane.

2. Brick according to Claim 1, characterised in that both the front face (10) and also the two side faces (12, 13) are convex toward the outside.

3. Brick according to Claim 2, characterised in that front face (10) and side faces (12, 13) are drawn in through the curvature downwards and upwards.

4. Brick according to Claim 3, characterised in that the transition of side faces (12, 13) to the front face (10) is rounded.

5. Brick according to Claim 4, characterised in that the side faces (12, 13) have a rounding toward the rear.

6. Brick according to Claim 5, characterised in that the rounding of the side faces (12, 13) follows at least approximately a uniformly curved line.

7. Brick according to Claim 6, characterised in that the curved line is a section of a conic section.

8. Brick according to Claim 1, characterised in that the partitions (14, 15) run symmetrically with respect to a median plane of the front face (10) normal to the base (11).

9. Brick according to Claim 8, characterised in that the partitions (14, 15) in outline have a curve, such that the space (B) between them has the greatest dimension in the central zone.

10. Brick according to Claim 9, characterised in that the partitions (14, 15) in each case represent a section of the surface of a vertical cylinder with a conic section as base line.

**Revendications**

1. Bloc de construction pour murs montés sans mortier, pouvant laisser passer la végétation, avec paroi frontale (10), paroi de fond (11) et deux parois latérales (12, 13), caractérisé par une paroi de fond (11) plane avec parties arrondies pour le raccordement à la paroi frontale (10) ou aux parois latérales (12, 13) et par le fait qu'il y a en outre, au moins deux autres cloisons de séparation (14, 15), délimitant un espace médian (B) et deux espaces extrêmes (A, C) entre les parois latérales (12, 13), et que les bords supérieurs de la paroi frontale (10) des parois latérales (12, 13) et des cloisons de séparation (14, 15) se trouvent dans un même plan, du moins approximativement.

2. Bloc de construction suivant revendication 1, caractérisé en ce que aussi bien la paroi frontale (10) que les deux parois latérales (12, 13) sont bombées vers l'extérieur.

3. Bloc de construction suivant revendication 2, caractérisé en ce que la paroi frontale (10) et les parois latérales (12, 13) se trouvent en retrait vers le bas et vers le haut du fait qu'elles sont bombées.

4. Bloc de construction suivant revendication 1, caractérisé en ce que le raccordement des parois latérales (12, 13) à la paroi frontale (10) est arrondi.

5. Bloc de construction suivant revendication 4, caractérisé en ce que les parois latérales (12, 13) présentent une partie arrondie vers l'arrière.

6. Bloc de construction suivant revendication 5, caractérisé en ce que la partie arrondie des parois latérales (12, 13) suit, du moins approximativement, une courbe régulière.

7. Bloc de construction suivant revendication 6, caractérisé en ce que la courbe est un arc de conique.

8. Bloc de construction suivant revendication 1, caractérisé en ce que les cloisons de séparation (14, 15) sont tracées symétriquement par rapport à un plan médian de la paroi frontale (10) situé perpendiculairement à la paroi de fond (11).

9. Bloc de construction suivant revendication 8, caractérisé en ce que les cloisons de séparation (14, 15) présentent une courbure dans leur tracé horizontal, de telle manière que l'espace (B) compris entre ces cloisons ait la plus grande extension dans la zone du milieu.

10. Bloc de construction suivant revendication 9, caractérisé en ce que les cloisons de séparation (14, 15) constituent chacune une partie d'enveloppe d'un cylindre vertical, ayant comme ligne de base une conique.

0 047 717

Fig. 1

Fig. 2

Fig. 3

Fig. 4